# EUROPEAN PATENT SPECIFICATION

(11) **EP 1 448 576 B1**
(45) Date of publication and mention of the grant of the patent: **15.06.2005**
(21) Application number: 02781546.3
(22) Date of filing: 19.11.2002
(51) Int. Cl.: C07F 9/572

(54) **PREPARATION OF CRYSTALLINE POLYMORPHS OF FOSINOPRIL SODIUM**
HERSTELLUNG VON KRISTALLINEN POLYMORPHEN VON FOSINOPRIL NATRIUM
PREPARATION DE POLYMORPHES CRISTALLINS DE FOSINOPRIL SODIUM

(30) Priority: 30.11.2001 ES 200102739
(43) Date of publication of application: 25.08.2004
(73) Proprietor: Quimica Sintetica, S.A., 08038 Barcelona (ES)
(72) Inventor: GALLEGO PATO, Sandra, E-28807 Alcala de Henares (ES); PALOMO COLL, Antonio,Luis, E-08017 Barcelona (ES); PALOMO NICOLAU, Francisco,Eugenio, E-28804 Alcala de Henares (ES)
(74) Representative: Ponti Sales, Adelaida
(86) International application number: PCT/IB2002/004828
(87) International publication number: WO 2003/045961

(56) References cited:
- EP-A- 0 442 378
- WO-A-02/088149
- BRITTAIN H G ET AL: "SOLID-STATE NMR AND IR FOR THE ANALYSIS OF PHARMACEUTICAL SOLIDS: POLYMORPHS OF FOSINOPRIL SODIUM" JOURNAL OF PHARMACEUTICAL AND BIOMEDICAL ANALYSIS, NEW YORK, NY, US, vol. 11, no. 11/12, April 1993 (1993-04), pages 1063-1069, XP001080738 ISSN: 0731-7085
- SERAJUDDIN A T M ET AL: "SELECTION OF SOLID DOSAGE FORM COMPOSITION THROUGH DRUG-EXCIPIENT COMPATIBILITY TESTING" JOURNAL OF PHARMACEUTICAL SCIENCES, AMERICAN PHARMACEUTICAL ASSOCIATION. WASHINGTON, US, vol. 88, no. 7, 20 May 1999 (1999-05-20), pages 696-704, XP001088775 ISSN: 0022-3549

## Description

### Field of the technique

This invention relates to a new procedure for the selective preparation of the crystalline polymorphs of the sodium salt of fosinopril, especially polymorph A, which is currently used as an antihypertensive agent belonging to the group of inhibitors of the angiotensin converting enzyme.

### Prior art

Fosinopril is a derivative of phosphinic acid, of chemical name [1[S*(R*) ], 2α,4β]-4-cyclohexyl-1-[[[2-methyl-1-(loxoproxy)propoxy] (4-phenylbutyl)phosphinyl] acetyl]-L-proline, whose sodium salt is shown in the formula below: 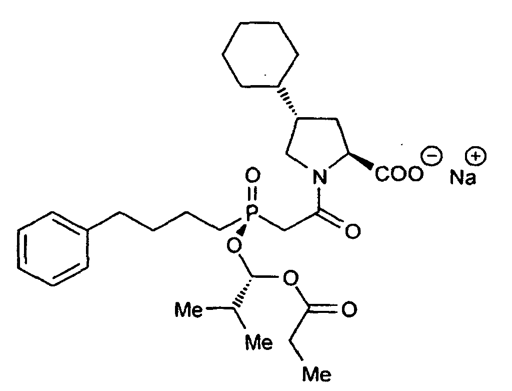 Specifically, the sodium salt of fosinopril was first described in *Fed.Proc., Fed. Am. Soc. Exp. Biol., **1984*****,** *43*, *733*, and its preparation is described in patent US-A-4873356.

The sodium salt of fosinopril exists in two different crystalline forms, called polymorphs A and B, polymorph A being the one currently used for the preparation of medicinal products.

European patent EP-B-0442378 describes specific procedures to selectively obtain each of the two polymorphs of the sodium salt of fosinopril; as stated therein, polymorph A is the more stable one from the thermodynamic point of view.

As described in the above mentioned patent, when the fosinopril salt or a mixture of fosinopril and an alkaline metal donor are placed in a ketonic or hydroxylic solvent, or in a mixture of both, the quantity of water is decisive in the formation of one polymorph or the other. Form A predominates when the quantity of water is higher than 0.2% (v/v) of the total water/solvent system, preferably between 1 and 3%. With water concentrations between 0.2% and 0.0%, polymorph B formation predominates.

European patent EP-B-0442378 specifically describes a procedure for the preparation of polymorph A, where a mixture of fosinopril and sodium ethylhexanoate is treated in acetone containing 1.7% of water (v/v), stirred at room temperature and where polymorph A is then isolated by filtration. Also described is that the suspension of polymorph B of sodium fosinopril in acetone containing 2% of water, and further stirring of the mixture at room temperature, lead to isolation by filtration of form A.

For polymorph B preparation, the above mentioned European patent describes a specific procedure consisting in evaporating to dryness a polymorph A solution in methanol at 35°C.

Regarding the obtention of polymorph A, which is the one presently marketed, the procedure described in the aforesaid European patent has the disadvantage of requiring the use of a certain quantity of water, which leads to a greater risk of producing untoward degradations of the active substance.

As shown experimentally, sodium fosinopril in mixtures of ketonic or alcoholic solvents and water undergoes hydrolysis, leading to the formation of the corresponding phosphinic acid, a product known as fosinoprilate. This hydrolytic degradation increases with time and with higher temperature and higher water content of the solvent.

Regarding the obtention of polymorph B, methanol solutions of sodium fosinopril evaporated in an atomizer at room temperature have been found to yield a form B which is spontaneously hydrated under air exposure, thereby increasing the risk of hydrolytic degradation.

Thus, there remains a need for new procedures for the preparation of the polymorphs of the sodium salt of fosinopril, particularly polymorph A, in order to obtain a lower risk of hydrolytic degradation of the active ingredient.

### Object of the invention

The object of this invention is a procedure for the selective preparation of the crystalline polymorphs of fosinopril, particularly polymorph A, leading to a lower risk of hydrolytic degradation of the active ingredient.

### Brief description of the drawings

Figure 1 shows the IR spectrum of polymorph A of the sodium salt of fosinopril, recorded in KBr tablet.
Figure 2 shows the nuclear magnetic resonance spectrum of carbon 13 (¹³C-NMR), in solid state, of polymorph A of the sodium salt of fosinopril.
Figure 3 shows the IR spectrum of polymorph B of the sodium salt of fosinopril, recorded in KBr tablet.
Figure 4 shows the nuclear magnetic resonance spectrum of carbon 13 (¹³C-NMR), in solid state, of polymorph B of the sodium salt of fosinopril.

### Description of the invention

The authors of the present invention have found that the obtention of polymorph A does not necessarily require the crystallization of the sodium salt of fosinopril in a medium containing substantial quantities of water, thereby avoiding the problems related to hydrolytic degradations of the active substance.

The procedure object of the invention is characterized by the formation of a total or partial solution of sodium fosinopril in a solvent or mixture of solvents containing less than 0.2% (v/v) of water with respect to the total amount of water plus solvent, in a way that:
(a) the solvent is selected from those containing oxygen in their molecule and the nitriles or mixtures thereof, provided that the solvent or mixture of solvents contains more than 0.4% (v/v) of a C₁-C₄ aliphatic alcohol, linear or ramified, in which case polymorph A crystallizes at a temperature ranging between 0°C and 50°C and separates from the mixture, or
(b) the solvent is tetrahydrofuran, with no other solvent mixture, in this case, when polymorph A is seeked, the starting point is a partial solution of the sodium salt of fosinopril crystallized at a temperature between 0°C and 50°C, or the starting point is a total solution of this salt crystallized at a temperature between 20°C and 35°C, and when polymorph B is seeked, the starting point is a total solution of the sodium salt of fosinopril crystallized at a temperature between 0°C and 5°C, and the polymorph obtained in each case is separated from the mixture.

For the purposes of this invention, and unless expressly stated otherwise, a solution of the fosinopril salt in the solvent or solvent mixture is to be understood as any degree of solution, with total solution of the product not being necessary at the beginning of the process.

In the case of option (a) above, the following solvents may be listed among those containing oxygen in their molecule: the C₁-C₆ aliphatic alcohols, linear or ramified, such as methanol, ethanol, n-propanol, isopropanol, n-butanol, etc.; aliphatic cyclic alcohols, such as cyclohexanol; dioles, such as ethylene glycol, 1,2-propylene glycol, 1,3-propanodiole, 1,4-butanodiole, etc.; C₁-C₆ aliphatic ketones, linear or ramified, such as acetone, methylethylketone, methylisobutylketone, etc.; cyclic aliphatic ketones, such as cyclohexanone; low chain aliphatic esters, such as ethyl acetate; low chain aliphatic ethers, such as ethyl ether, isopropylic ether, etc.; cyclic aliphatic ethers, such as tetrahydrofuran and dioxane.

Among the solvents which contain oxygen in their molecule, acetone, methylethylketone and tetrahydrofuran are preferably used; among the nitrile-type solvents, acetonitrile is preferred.

A mandatory condition for option (a) is that the solvent system contains more than 0.4% (v/v) of a C₁-C₄ aliphatic alcohol, linear or ramified, of which methanol and isopropanol are usually preferred. The proportion of alcohol in the solvent system is preferably between 1% and 5% (v/v).

The previously obtained sodium salt of fosinopril itself may be used as starting point, whether in the form of polymorph A, polymorph B or a mixture of both polymorphs, in which case this salt is mixed with the solvent system and then stirred at the prescribed temperature for the time required for the formation of the desired polymorph.

The sodium salt of fosinopril can also be formed in the selected solvent system itself by adding non-salified fosinopril and the sodium salt of an aliphatic carboxylic acid, linear or ramified and ot chain equal to or higher than C₅, preferably sodium 2-ethylhexanoate and the sodium salt of pivalic acid.

In the case of option (a), a crystallization temperature between 35°C and 45°C is preferred; however, at the time of substance isolation, e.g. by means of filtration, it is advisable to cool off the mixture at a temperature between 15°C and 25°C.

A preferred embodiment of the invention comprises mixing a solution of an aliphatic carboxylic acid, linear or ramified and of chain equal to or higher than C₅, in a solvent selected from those containing oxygen in their molecule and the nitriles or mixtures thereof, with a sodium methoxide solution in methanol and with a fosinopril solution in the selected solvent, so that the resulting mixture has a water content lower than 0.2% and a methanol content higher than 0.4% with respect to the total volume of the mixture, and proceeding with crystallization at a temperature between 0°C and 50°C with further separation from the mixture of the precipitated crystals of sodium fosinopril polymorph A.

In the above embodiment the following aspects are preferred, independently or altogether: aliphatic carboxylic acid is selected from 2-ethylhexanoic acid and pivalic acid; the aliphatic carboxylic acid and sodium methoxide ratios are close to stoichiometric; the sodium salt ratio of the aliphatic carboxylic acid as related to fosinopril is between 1.0 and 1.2 versus the stoichiometric ratio; methanol content is between 1% and 5% (v/v) of total water plus solvent; the solution of the sodium salt of the aliphatic carboxylic acid is added to the fosinopril solution; the crystallization temperature is between 35°C and 45°C; and the mixture is cooled off at a temperature between 15°C and 25°C before polymorph A crystals of the sodium salt of fosinopril are separated from the mixture.

Another preferred embodiment of the invention comprises mixing the sodium salt of an aliphatic carboxylic acid, linear or ramified and of chain equal to or higher than C₅, and a solution of fosinopril in a solvent selected from those containing oxygen in their molecule and the nitriles or mixtures thereof, so that the resulting mixture has a water content lower than 0.2% and a linear or ramified C₁-C₄ aliphatic alcohol content higher than 0.4% with respect to the total volume of the mixture, and crystallizing at a temperature between 0°C and 50°C, with further separation from the mixture of the precipitated crystals of sodium fosinopril polymorph A.

In the above embodiment the following aspects are preferred, independently or altogether: the aliphatic carboxylic acid is selected from 2-ethylhexanoic acid and pivalic acid; the sodium salt ratio of aliphatic carboxylic acid as related to fosinopril is between 1.0 and 1.2 versus the stoichiometric ratio; the linear or ramified C₁-C₄ aliphatic alcohol is methanol or isopropanol and its content is between 1% and 5% (v/v) of total water plus solvent; the crystallization temperature is between 20°C and 25°C; and the mixture is cooled off at a temperature between 15°C and 25°C before polymorph A crystals of the sodium salt of fosinopril are separated from the mixture.

Another preferred embodiment of the invention comprises mixing the sodium salt of fosinopril, in either of its crystalline forms or a mixture thereof, with a solvent selected from those containing oxygen in their molecule and the nitriles or mixtures thereof, so that the resulting mixture has a water content lower than 0.2% and a content of linear or ramified C₁-C₄ aliphatic alcohol higher than 0.4% with respect to the total volume of the mixture, and proceeding with crystallization at a temperature between 0°C and 50°C, with further separation from the mixture of the precipitated crystals of sodium fosinopril polymorph A.

In the above embodiment the following aspects are preferred, independently or altogether: the linear or ramified C₁-C₄ aliphatic alcohol is methanol or isopropanol and its content is between 1% and 5% (v/v) of total water plus solvent; the crystallization temperature is between 35°C and 45°C; and the mixture is cooled off at a temperature between 15°C and 25°C before polymorph A crystals of the sodium salt of fosinopril are separated from the mixture.

Another preferred embodiment of the invention comprises mixing fosinopril and the sodium salt of an aliphatic carboxylic acid, linear or ramified and of chain equal to or higher than C₅, in tetrahydrofuran so that the resulting mixture has a water content lower than 0.2% with respect to the total volume of the mixture, and proceeding with crystallization at a temperature between 20°C and 35°C, with further separation from the mixture of the precipitated crystals of sodium fosinopril polymorph A.

Another preferred embodiment of the invention comprises mixing fosinopril and the sodium salt of an aliphatic carboxylic acid, linear or ramified and of chain equal to or higher than C₅, in tetrahydrofuran until total solution is formed, so that the resulting solution has a water content lower than 0.2% with respect to the total volume of the mixture, and proceeding with crystallization at a temperature between 0°C and 5°C, with further separation from the mixture of the precipitated crystals of sodium fosinopril polymorph B.

In the two previous embodiments, the aliphatic carboxylic acid is selected preferably from 2-ethylhexanoic acid and pivalic acid.

Finally, another preferred embodiment of the invention comprises mixing the sodium salt of fosinopril, in either of its crystalline forms or a mixture thereof, in tetrahydrofuran so that the resulting mixture has a water content lower than 0.2% with respect to the total volume of the mixture, and proceeding with crystallization at a temperature between 20°C and 35°C, with further separation from the mixture of the precipitated crystals of sodium fosinopril polymorph A.

The examples that follow are outlined to provide the expert with a sufficiently clear and complete explanation of this invention, but should not be considered as limitations on the essential aspects of the object of the invention, as exposed in the previous sections of this description.

### Examples

### Example 1 Obtention of polymorph A of the sodium salt of fosinopril

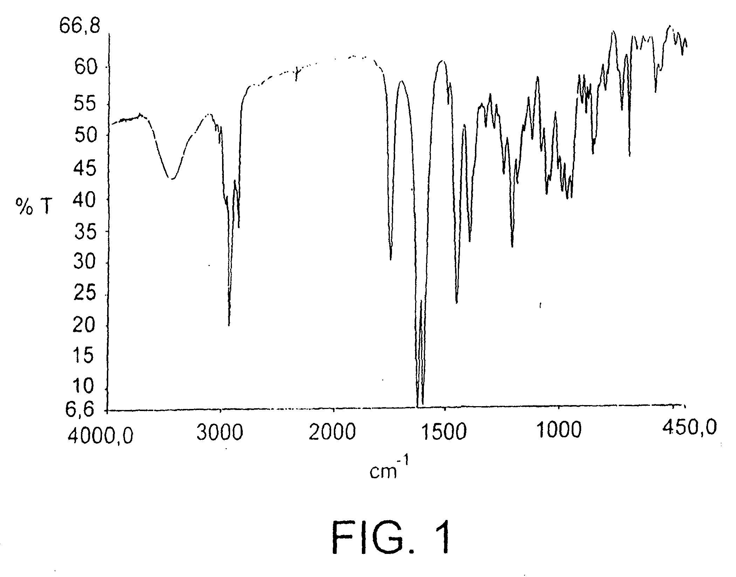

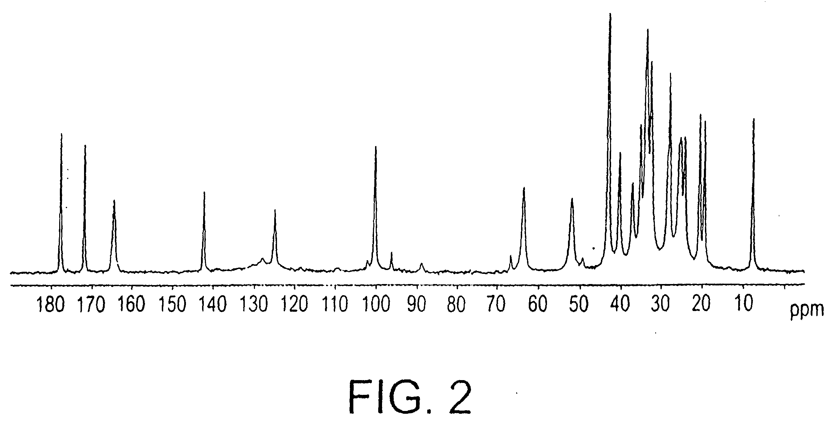

7.0 kg of 2-ethylhexanoic acid are added to 25 kg of anhydrous acetone (water content lower than 0.2% v/v), cooled off between 0°C and 5°C, and 9.0 kg of a sodium methoxide solution in 30% methanol are added gradually. The resulting solution is added to a mixture of 22 kg of fosinopril and 160 kg of anhydrous acetone heated between 35°C and 45°C. The mixture is then cooled off at room temperature and the sodium fosinopril crystals are separated by filtration and vacuum-dried to yield 20.7 kg of polymorph A (90% of theoretical yield). The IR spectrum and the ¹³C-NMR spectrum are shown in Figures 1 and 2, respectively. None of the spectrums show significant amounts of polymorph B.

### Example 2 Obtention of polymorph B of the sodium salt of fosinopril

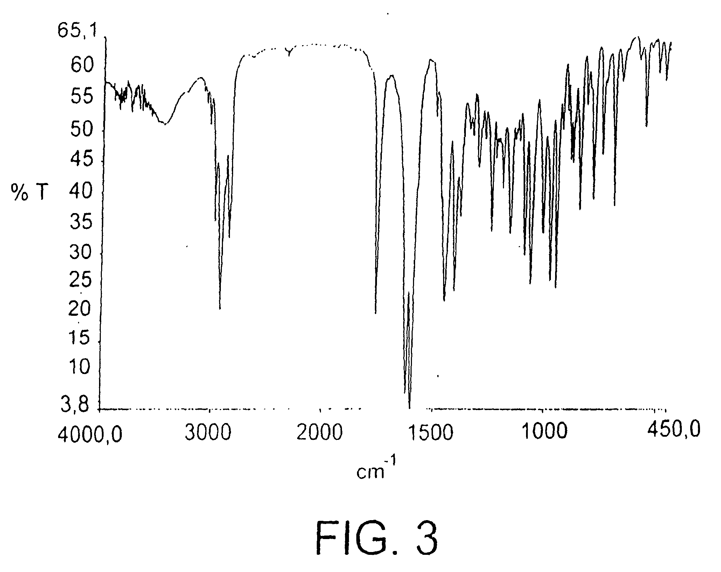

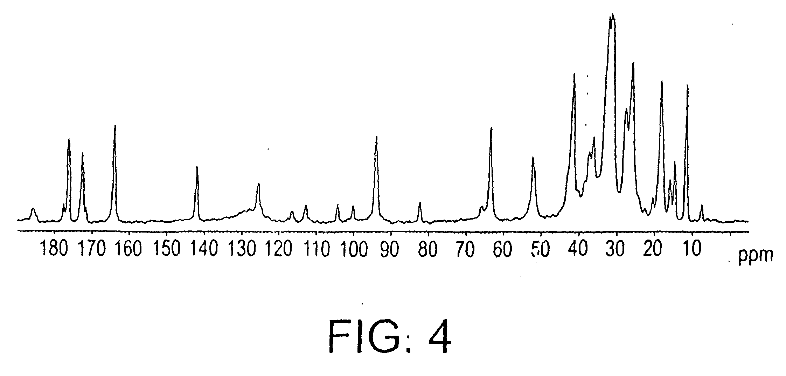

2.0 g of sodium 2-ethylhexanoate are added to a solution of 5.5 g of fosinopril in 60 mL of tetrahydrofuran (water content according to Karl-Fisher lower than 0.2%) cooled off between 0°C and 5°C. After one-hour stirring at the indicated temperature, the suspension is filtered, the filtered precipitate is washed with tetrahydrofuran, cooled off between 0°C and 5°C, and vacuum-dried to yield 5.04 g of polymorph B of the sodium salt of fosinopril. The IR spectrum and the ¹³C-NMR spectrum are shown in Figures 3 and 4, respectively. None of the spectrums show significant amounts of polymorph A.

### Example 3 Obtention of polymorph A of the sodium salt of fosinopril

3.5 g of sodium 2-ethylhexanoate are added to a solution of 12.0 g of fosinopril in 130 mL of tetrahydrofuran (water content according to Karl-Fisher lower than 0.2%), kept between 20°C and 30°C. After 30-minute stirring at the indicated temperature, the suspension is filtered, the filtered precipitate is washed with tetrahydrofuran kept between 20°C and 30°C, and vacuum-dried to yield 9.8 g of polymorph A of the sodium salt of fosinopril.

### Example 4 Obtention of polymorph A of the sodium salt of fosinopril

3.5 g of sodium 2-ethylhexanoate are added at 25°C to a solution of fosinopril (12.0 g) in tetrahydrofuran (130 mL) (water content according to Karl-Fisher lower than 0.2%) containing 1.0% of methanol (v/v). The mixture is kept at that temperature and stirred for one hour, the crystals of sodium fosinopril are filtered and vacuum-dried to yield 9.6 g of polymorph A.

### Example 5 Obtention of polymorph A of the sodium salt of fosinopril

Proceeding as in example 4, but replacing tetrahydrofuran with methylethylketone (130 mL), 11.4 g of polymorph A of the sodium salt of fosinopril are obtained.

### Example 6 Obtention of polymorph A of the sodium salt of fosinopril

Proceeding as in example 4, but replacing tetrahydrofuran with acetonitrile (130 mL), 9.7 g of polymorph A of the sodium salt of fosinopril are obtained.

### Example 7 Obtention of polymorph A of the sodium salt of fosinopril

Proceeding as in example 4, but replacing tetrahydrofuran with acetone (130 mL) and methanol by isopropanol (1.3 mL), 11.3 g of polymorph A of the sodium salt of fosinopril are obtained.

### Example 8 Obtention of polymorph A of the sodium salt of fosinopril

A suspension of 2.8 g of polymorph B of fosinopril is stirred for one hour at room temperature in 29 mL of acetone (water content according to Karl-Fisher lower than 0.2%) containing 0.8 mL of methanol (2.7% v/v). The precipitate is filtered, washed with acetone and vacuum-dried to yield 2.3 g of polymorph A of sodium fosinopril.

## Claims

1. A procedure for the selective preparation of the crystalline polymorphs of the sodium salt of fosinopril,
**characterized by** the formation of a total or partial solution of sodium fosinopril in a solvent or mixture of solvents containing less than 0.2% (v/v) of water with respect to total water plus solvent, in a way that:
(a) the solvent is selected from those containing oxygen in their molecule and the nitriles or mixtures thereof, provided that the solvent or mixture of solvents contains more than 0.4% (v/v) of a C₁-C₄ aliphatic alcohol, linear or ramified, in which case polymorph A crystallizes at a temperature ranging between 0°C and 50°C and separates from the mixture, or
(b) the solvent is tetrahydrofuran, with no other solvent mixture, in this case, when polymorph A is seeked, the starting point is a partial solution of the sodium salt of fosinopril crystallized at a temperature between 0°C and 50°C, or the starting point is a total solution of this salt crystallized at a temperature between 20°C and 35°C, and when polymorph B is seeked, the starting point is a total solution of the sodium salt of fosinopril crystallized at a temperature between 0°C and 5°C, and the polymorph obtained in each case is separated from the mixture.

2. A procedure according to Claim 1, **characterized in that** the solvent containing oxygen in its molecule is selected from: methanol, ethanol, n-propanol, isopropanol, n-butanol; cyclohexanol; ethylene glycol, 1,2-propylene glycol, 1,3-propanodiole, 1,4-butanodiole; acetone, methylethylketone, methylisobutylketone; cyclohexanone; ethyl acetate; ethyl ether, isopropylic ether; tetrahydrofuran and dioxane.

3. A procedure according to Claim 1 or Claim 2, **characterized in that** the solvent is selected from acetone, methylethylketone, tetrahydrofuran and acetonitrile, or mixtures thereof.

4. A procedure according to Claims 1 to 3, **characterized in that** the C₁-C₄ aliphatic alcohol, linear or ramified, is selected from methanol and isopropanol, and the proportion of said alcohol in the solvent system is between 1% and 5% (v/v).

5. A procedure according to Claims 1 to 4, **characterized in that** the total or partial solution of sodium fosinopril is prepared by adding non-salified fosinopril to the solvent system and by the addition or in situ formation of sodium salt of an aliphatic carboxylic acid, linear or ramified and of chain equal to or higher than C₅.

6. A procedure according to Claim 5, **characterized in that** the aliphatic carboxylic acid is selected from 2-ethylhexanoic acid and pivalic acid.

7. A procedure according to Claims 5 or 6, **characterized in that** it comprises mixing a solution of the aliphatic carboxylic acid in a solvent selected from those containing oxygen in their molecule and the nitriles or mixtures thereof, with a sodium methoxide solution in methanol and with a fosinopril solution in the selected solvent, so that the resulting mixture has a water content lower than 0.2% and a methanol content higher than 0.4% with respect to the total volume of the mixture, and proceeding with crystallization at a temperature between 0°C and 50°C, with further separation from the mixture of the precipitated crystals of sodium fosinopril polymorph A.

8. A procedure according to Claim 7, **characterized in that**, independently or altogether, the following characteristics are comprised: the aliphatic carboxylic acid and sodium methoxide ratios match stoichiometric ratios; the sodium salt ratio of the aliphatic carboxylic acid as related to the fosinopril is between 1.0 and 1.2 versus the stoichiometric ratio; the methanol content is between 1% and 5% (v/v) of total water plus solvent; the solution of the sodium salt of the aliphatic carboxylic acid is added to the fosinopril solution; the crystallization temperature is between 35°C and 45°C; and the mixture is cooled off at a temperature between 15°C and 25°C before polymorph A crystals of the sodium salt of fosinopril are separated from the mixture.

9. A procedure according to Claims 5 or 6, **characterized in that** it comprises mixing the sodium salt of the aliphatic carboxylic acid and a solution of fosinopril in a solvent selected from those which contain oxygen in their molecule and the nitriles or mixtures thereof, so that the resulting mixture has a water content lower than 0.2% and a linear or ramified C₁-C₄ aliphatic alcohol content higher than 0.4% with respect to the total volume of the mixture, and proceeding with crystallization at a temperature between 0°C and 50°C, with further separation from the mixture of the precipitated crystals of sodium fosinopril polymorph A.

10. A procedure according to Claim 9, **characterized in that**, independently or altogether, the following characteristics are comprised: the aliphatic carboxylic acid is selected from 2-ethylhexanoic acid and pivalic acid; the sodium salt ratio of aliphatic carboxylic acid as related to fosinopril is between 1.0 and 1.2 versus the stoichiometric ratio; the linear or ramified C₁-C₄ aliphatic alcohol is methanol or isopropanol and its content is between 1% and 5% (v/v) of total water plus solvent; the crystallization temperature is between 35°C and 45°C; and the mixture is cooled off at a temperature between 15°C and 25°C before polymorph A crystals of the sodium salt of fosinopril are separated from the mixture.

11. A procedure according to Claims 1 to 4, **characterized in that** the total or partial solution of sodium fosinopril is prepared by adding the sodium salt of fosinopril to the solvent system, in either of its crystalline forms A or B or a mixture of both.

12. A procedure according to Claim 11, **characterized in that** it comprises mixing the sodium salt of fosinopril with a solvent selected from those containing oxygen in their molecule and the nitriles or mixtures thereof, so that the resulting mixture has a water content lower than 0.2% and a content of a linear or ramified C₁-C₄ aliphatic alcohol higher than 0.4% with respect to the total volume of the mixture, and proceeding with crystallization at a temperature between 0°C and 50°C, with further separation from the mixture of the precipitated crystals of sodium fosinopril polymorph A.

13. A procedure according to Claim 12, **characterized in that**, independently or altogether, the following characteristics are comprised: the linear or ramified C₁-C₄ aliphatic alcohol is methanol or isopropanol and its content is between 1% and 5% (v/v) of total water plus solvent; the crystallization temperature is between 35°C and 45°C; and the mixture is cooled off at a temperature between 15°C and 25°C before polymorph A crystals of the sodium salt of fosinopril are separated from the mixture.

14. A procedure according to Claims 5 or 6, **characterized in that** it comprises mixing fosinopril and the sodium salt of aliphatic carboxylic acid in tetrahydrofuran, so that the resulting mixture has a water content lower than 0.2% with respect to the total volume of the mixture, and proceeding with crystallization at a temperature between 20°C and 35°C, with further separation from the mixture of the precipitated crystals of sodium fosinopril polymorph A.

15. A procedure according to Claims 5 or 6, **characterized in that** it comprises mixing fosinopril and the sodium salt of aliphatic carboxylic acid in tetrahydrofuran until a total solution is formed, so that the resulting solution has a water content lower than 0.2% with respect to the total volume of the mixture, and proceeding with crystallization at a temperature between 0°C and 5°C, with further separation from the mixture of the precipitated crystals of sodium fosinopril polymorph B.

16. A procedure according to Claims 14 or 15, **characterized in that** the aliphatic carboxylic acid is selected from 2-ethylhexanoic acid and pivalic acid.

17. A procedure according to Claim 11, **characterized in that** it comprises mixing the sodium salt of fosinopril in tetrahydrofuran, so that the resulting mixture has a water content lower than 0.2% with respect to the total volume of the mixture, and proceeding with crystallization at a temperature between 20°C and 35°C, with further separation from the mixture of the precipitated crystals of sodium fosinopril polymorph A.

## Patentansprüche

1. Verfahren zur selektiven Herstellung der kristallinen Polymorphe des Natriumsalzes von Fosinopril, **gekennzeichnet durch** die Bildung einer vollständigen oder teilweisen Lösung von Natriumfosinopril in einem Lösungsmittel oder einer Mischung von Lösungsmitteln, enthaltend weniger als 0,2 Vol-% Wasser in Bezug auf die Gesamtmenge Wasser plus Lösungsmittel, in einer Art, dass:
(a) das Lösungsmittel aus denen ausgewählt ist, die Sauerstoff in ihrem Molekül enthalten und die Nitrile oder Mischungen davon, vorausgesetzt, dass das Lösungsmittel oder die Mischung von Lösungsmitteln mehr als 0,4 Vol-% eines aliphatischen C₁-C₄ Alkohols, linear oder verzweigt, enthält, in welchem Fall das Polymorph A bei einer Temperatur im Bereich zwischen 0°C und 50°C kristallisiert und sich von der Mischung abtrennt, oder
(b) das Lösungsmittel Tetrahydrofuran ist, mit keiner anderen Lösungsmittelbeimischung, in dem Fall, in dem das Polymorph A gewünscht ist, der Ausgangspunkt eine partielle Lösung des Natriumsalzes von Fosinopril ist, das bei einer Temperatur zwischen 0°C und 50°C kristallisiert, oder der Ausgangspunkt eine vollständige Lösung dieses Salzes ist, das bei einer Temperatur zwischen 20°C und 35°C kristallisiert, und wenn Polymorph B gewünscht ist, der Ausgangspunkt eine vollständige Lösung des Natriumsalzes von Fosinopril ist, das bei einer Temperatur zwischen 0°C und 5°C kristallisiert, und das Polymorph, das im jeweiligen Fall erhalten wird, von der Mischung abgetrennt wird.

2. Verfahren nach Anspruch 1, **dadurch gekennzeichnet, dass** das Lösungsmittel, das Sauerstoff in seinem Molekül enthält, ausgewählt ist aus: Methanol, Ethanol, n-Propanol, Isopropanol, n-Butanol; Cyclohexanol; Ethylenglycol, 1,2-Propylenglycol, 1,3-Propandiol, 1,4-Butandiol; Aceton, Methyethylketon, Methylisobutylketon; Cyclohexanon; Ethylacetat; Ethylether, Isopropylether; Tetrahydrofuran und Dioxan.

3. Verfahren nach Anspruch 1 oder 2, **dadurch gekennzeichnet, dass** das Lösungsmittel ausgewählt ist aus Aceton, Methylethylketon, Tetrahydrofuran und Acetonitril, oder Mischungen davon.

4. Verfahren nach einem der Ansprüche 1 bis 3, **dadurch gekennzeichnet, dass** der aliphatische C₁-C₄ Alkohol, linear oder verzweigt, aus Methanol und Isopropanol ausgewählt ist, und der Anteil des Alkohols in dem Lösungsmittelsystem zwischen 1 Vol-% und 5 Vol-% beträgt.

5. Verfahren nach einem der Ansprüche 1 bis 4, **dadurch gekennzeichnet, dass** die vollständige oder teilweise Lösung von Natriumfosinopril durch Zugabe von nicht salzgebildetem Fosinopril zu dem Lösungsmittelsystem und durch die Zugabe oder in situ Bildung von Natriumsalz einer aliphatischen Carbonsäure, linear oder verzweigt, und mit einer Kettenlänge gleich oder länger als C₅, hergestellt wird.

6. Verfahren nach Anspruch 5, **dadurch gekennzeichnet, dass** die aliphatische Carbonsäure aus 2-Ethylhexansäure und Pivalinsäure ausgewählt wird.

7. Verfahren nach einem derAnsprüche 5 oder 6, **dadurch gekennzeichnet, dass** es das Mischen einer Lösung der aliphatischen Carbonsäure in einem Lösungsmittel, ausgewählt aus denen, die Sauerstoff in ihrem Molekül enthalten und den Nitrilen oder Mischungen davon, mit einer Natriummethoxidlösung in Methanol und mit einer Fosinoprillösung in dem ausgewählten Lösungsmittel umfasst, sodass die resultierende Mischung einen Wasseranteil von weniger als 0,2 % und einen Methanolanteil von höher als 0,4 % in Bezug auf das Gesamtvolumen der Mischung besitzt, und Fortschreiten mit Kristallisation bei einer Temperatur zwischen 0°C und 50°C, mit weiterer Abtrennung von ausgefällten Kristallen des Natriumfosinoprilpolymorphs A aus der Mischung umfasst.

8. Verfahren nach Anspruch 7, **dadurch gekennzeichnet, dass**, unabhängig oder zusammen, die folgenden Eigenschaften umfasst werden: die Verhältnisse der aliphatischen Carbonsäure und des Natriummethoxids entsprechen stoichiometrischen Verhältnissen; das Verhältnis der Natriumsalze aliphatischen Carbonsäure in Bezug auf das Fosinopril ist zwischen 1,0 und 1,2 gegenüber dem stoichiometrischen Verhältnis; der Methanolanteil ist zwischen 1 Vol-% und 5 Vol-% der Gesamtmenge Wasser plus Lösungsmittel; die Lösung des Natriumsalzes der aliphatischen Carbonsäure wird zu der Fosinoprillösung zugegeben; die Kristallisationstemperatur ist zwischen 35°C und 45°C; und die Mischung wird auf eine Temperatur zwischen 15°C und 25°C abgekühlt, bevor die Kristalle des Polymorphs A des Natriumsalzes von Fosinopril aus der Mischung abgetrennt werden.

9. Verfahren nach einem der Ansprüche 5 oder 6, **dadurch gekennzeichnet, dass** es das Mischen des Natriumsalzes der aliphatischen Carbonsäure und einer Lösung von Fosinopril in einem Lösungsmittel, ausgewählt aus denen, die Sauerstoff in ihrem Molekül enthalten und den Nitrilen oder Mischungen davon, umfasst, sodass die resultierende Mischung einen Wasseranteil von weniger als 0,2 % besitzt und einen Anteil an linearem oder verzweigten aliphatischen C₁-C₄ Alkohol größer als 0,4 % in Bezug auf das gesamte Volumen der Mischung besitzt, und Fortschreiten mit Kristallisation bei einer Temperatur zwischen 0°C und 50°C, mit weiterer Abtrennung von ausgefällten Kristallen des Natriumfosinoprilpolymorphs A aus der Mischung.

10. Verfahren nach Anspruch 9, **dadurch gekennzeichnet, dass**, unabhängig oder zusammen, die folgenden Eigenschaften umfasst werden: die aliphatische Carbonsäure wird aus 2-Ethylhexansäure und Pivalinsäure ausgewählt; das Verhältnis der Natriumsalze der aliphatischen Carbonsäure in Bezug auf Fosinopril ist zwischen 1,0 und 1,2 gegenüber dem stoichiometrischen Verhältnis; der lineare oder verzweigte aliphatische C₁-C₄ Alkohol ist Methanol oder Isopropanol und sein Anteil beträgt zwischen 1 Vol-% und 5 Vol-% der Gesamtmenge Wasser plus Lösungsmittel; die Kristallisationstemperatur ist zwischen 35°C und 45°C, und die Mischung wird auf eine Temperatur zwischen 15°C und 25°C abgekühlt, bevor die Kristalle des Polymorphs A des Natriumsalzes von Fosinopril aus der Mischung abgetrennt werden.

11. Verfahren nach einem der Ansprüche 1 bis 4, **dadurch gekennzeichnet, dass** die vollständige oder teilweise Lösung von Natriumfosinopril durch Zugabe des Natriumsalzes von Fosinopril zu dem Lösungsmittelsystem in einer seiner kristallinen Formen A oder B oder einer Mischung von beiden hergestellt wird.

12. Verfahren nach Anspruch 11, **dadurch gekennzeichnet, dass** es Mischen des Natriumsalzes von Fosinopril mit einem Lösungsmittel, ausgewählt aus denen, die Sauerstoff in ihrem Molekül enthalten und den Nitrilen oder Mischungen davon, sodass die resultierende Mischung einen Wasseranteil von weniger als 0,2 % und einen Anteil eines linearen oder verzweigten aliphatischen C₁-C₄ Alkohols von größer als 0,4 % in Bezug auf das gesamte Volumen der Mischung besitzt, und Fortschreiten mit Kristallisation bei einer Temperatur zwischen 0°C und 50°C, mit weiterer Abtrennung der ausgefällten Kristalle des Natriumfosinoprilpolymorphs A aus der Mischung, umfasst.

13. Verfahren nach Anspruch 12, **dadurch gekennzeichnet, dass**, unabhängig oder zusammen, die folgenden Eigenschaften umfasst werden: der lineare oder verzweigte aliphatische C₁-C₄ Alkohol ist Methanol oder Isopropanol und sein Anteil beträgt zwischen 1 Vol-% und 5 Vol-% des gesamten Wassers plus Lösungsmittels; die Kristallisationstemperatur beträgt zwischen 35°C und 45°C; und die Mischung wird auf eine Temperatur zwischen 15°C und 25°C abgekühlt, bevor die Kristalle des Polymorphs A des Natriumsalzes von Fosinopril aus der Mischung abgetrennt werden.

14. Verfahren nach Anspruch 5 oder 6, **dadurch gekennzeichnet, dass** es das Mischen von Fosinopril und des Natriumsalzes einer aliphatischen Carbonsäure in Tetrahydrofuran umfasst, sodass die resultierende Mischung einen Wasseranteil von weniger als 0,2 % in Bezug auf das gesamte Volumen der Mischung besitzt, und Fortschreiten mit Kristallisation bei einer Temperatur zwischen 20°C und 35°C mit weiterer Abtrennung von ausgefällten Kristallen des Natriumfosinoprilpolymorphs A umfasst.

15. Verfahren nach einem der Ansprüche 5 oder 6, **dadurch gekennzeichnet, dass** es das Mischen von Fosinopril und dem Natriumsalz einer aliphatischen Carbonsäure in Tetrahydrofuran bis zur Bildung einer vollständigen Lösung, sodass die resultierende Lösung einen Wasseranteil von weniger als 0,2 % in Bezug auf das gesamte Volumen der Mischung besitzt, und Fortschreiten mit der Kristallisation bei einer Temperatur zwischen 0°C und 5°C mit weiterer Abtrennung von ausgefällten Kristallen des Natriumfosinoprilpolymorphs B aus der Mischung, umfasst.

16. Verfahren nach den Ansprüchen 14 oder 15, **dadurch gekennzeichnet, dass** die aliphatische Carbonsäure aus 2-Ethylhexansäure und Pivalinsäure ausgewählt ist.

17. Verfahren gemäß Anspruch 11, **dadurch gekennzeichnet, dass** es das Mischen des Natriumsalzes von Fosinopril in Tetrahydrofuran, sodass die resultierende Mischung einen Wasseranteil von weniger als 0,2 % in Bezug auf das gesamte Volumen der Mischung, und Fortschreiten mit der Kristallisation bei einer Temperatur zwischen 20°C und 35°C mit weiterer Abtrennung der ausgefällten Kristalle des Natriumfosinoprilpolymorphs A aus der Mischung, umfasst.

## Revendications

1. Procédé pour la préparation sélective de polymorphes cristallins du sel de sodium de fosinopril, **caractérisé par** la formation d'une solution totale ou partielle de fosinopril de sodium dans un solvant ou un mélange de solvants contenant moins de 0,2 % (v/v) d'eau par rapport au total eau plus solvant, d'une manière telle que :
(a) le solvant est choisi parmi ceux contenant de l'oxygène dans leur molécule et des nitriles ou de mélanges de ceux-ci, pourvu que le solvant ou que le mélange de solvants contienne plus de 0,4 % (v/v) d'un alcool aliphatique en C₁-C₄, linéaire ou ramifié, auquel cas le polymorphe A cristallise à une température entre 0°C et 50°C et se sépare du mélange, ou
(b) le solvant est du tétrahydrofurane, avec aucun autre mélange de solvant, dans ce cas, lorsque le polymorphe A est recherché, le point de départ est une solution partielle de sel de sodium du fosinopril cristallisé à une température entre 0°C et 50°C, ou le point de départ est une solution totale de ce sel cristallisé à une température entre 20°C et 35°C, et lorsque le polymorphe B est recherché, le point de départ est une solution totale du sel de sodium de fosinopril cristallisé à une température entre 0°C et 5°C, et le polymorphe obtenu dans chaque cas est séparé du mélange.

2. Procédé selon la revendication 1, **caractérisé en ce que** le solvant contenant de l'oxygène dans sa molécule est choisi à partir : du méthanol, de l'éthanol, du n-propanol, de l'isopropanol, du n-butanol ; du cyclohexanol ; de l'éthylène glycol, du 1,2-propylène glycol, du 1,3-propanediol, du 1,4-butanediol ; de l'acétone, de la méthyléthylcétone, de la méthylisobutylcétone ; de la cyclohexanone ; de l'acétate d'éthyle ; de l'éther d'éthyle, de l'éther isopropylique ; du tétrahydrofurane et du dioxane.

3. Procédé selon la revendication 1 ou la revendication 2, **caractérisé en ce que** le solvant est choisi à partir de l'acétone, de la méthyléthylcétone, du tétrahydrofurane et de l'acétonitrile, ou de mélanges de ceux-ci.

4. Procédé selon les revendications 1 à 3, **caractérisé en ce que** l'alcool aliphatique en C₁-C₄, linéaire ou ramifié, est choisi à partir du méthanol et de l'isopropanol, et que la proportion dudit alcool dans le système de solvant est entre 1 % et 5 % (v/v).

5. Procédé selon les revendications 1 à 4, **caractérisé en ce que** la solution totale ou partielle de fosinopril de sodium est préparée par ajout de fosinopril non-salifié au système de solvants et par l'ajout ou la formation in situ d'un sel de sodium d'un acide carboxylique aliphatique, linéaire ou ramifié et de chaîne supérieure ou égale à C₅.

6. Procédé selon la revendication 5, **caractérisé en ce que** l'acide carboxylique aliphatique est choisi à partir de l'acide 2-éthylhexanoïque et de l'acide pivalique.

7. Procédé selon la revendication 5 ou 6, **caractérisé en ce qu'**il comprend le mélange d'une solution de l'acide carboxylique aliphatique dans un solvant choisi à partir de ceux contenant de l'oxygène dans leur molécule et des nitriles ou de mélanges de ceux-ci, avec une solution de méthoxyde de sodium dans du méthanol et avec une solution de fosinopril dans le solvant choisi, de sorte que le mélange résultant possède une teneur en eau inférieure à 0,2 % et une teneur en méthanol supérieure à 0,4 % par rapport au volume total du mélange, et la réalisation d'une cristallisation à une température entre 0°C et 50°C, avec une séparation supplémentaire à partir du mélange des cristaux précipités du polymorphe A de fosinopril de sodium.

8. Procédé selon la revendication 7, **caractérisé en ce que**, indépendamment ou de concert, les caractéristiques suivantes sont comprises : les rapports de l'acide carboxylique aliphatique et du méthoxyde de sodium correspondent à des rapports stoechiométriques ; le rapport du sel de sodium de l'acide carboxylique aliphatique relatif au fosinopril est entre 1,0 et 1,2 par rapport au rapport stoechiométrique ; la teneur en méthanol est entre 1 % et 5 % (v/v) du total eau plus solvant ; la solution du sel de sodium de l'acide carboxylique aliphatique est ajoutée à la solution de fosinopril ; la température de cristallisation est entre 35°C et 45°C ; et le mélange est refroidi à une température entre 15°C et 25°C avant que les cristaux de polymorphe A du sel de sodium du fosinopril soient séparés à partir du mélange.

9. Procédé selon la revendication 5 ou 6, **caractérisé en ce qu'**il comprend le mélange du sel de sodium de l'acide carboxylique aliphatique et d'une solution de fosinopril dans un solvant choisi à partir de ceux qui contiennent de l'oxygène dans leur molécule et des nitriles ou de mélanges de ceux-ci, de sorte que le mélange résultant possède une teneur en eau inférieure à 0,2 % et une teneur en alcool aliphatique en C₁-C₄, linéaire ou ramifié, supérieure à 0,4 % par rapport au volume total du mélange, et la réalisation d'une cristallisation à une température entre 0°C et 50°C, avec une séparation supplémentaire à partir du mélange des cristaux précipités du polymorphe A de fosinopril de sodium.

10. Procédé selon la revendication 9, **caractérisé en ce que**, indépendamment ou de concert, les caractéristiques suivantes sont comprises : l'acide carboxylique aliphatique est choisi à partir de l'acide 2-éthylexanoïque et de l'acide pivalique ; le rapport du sel de sodium de l'acide carboxylique aliphatique relatif au fosinopril est entre 1,0 et 1,2 par rapport au rapport stoechiométrique ; l'alcool aliphatique en C₁-C₄, linéaire ou ramifié, est du méthanol ou de l'isopropanol et sa teneur est entre 1 % et 5 % (v/v) du total eau plus solvant ; la température de cristallisation est entre 35°C et 45°C ; et le mélange est refroidi à une température entre 15°C et 25°C avant que les cristaux de polymorphe A du sel de sodium du fosinopril soient séparés à partir du mélange.

11. Procédé selon les revendications 1 à 4, **caractérisé en ce que** la solution totale ou partielle de fosinopril de sodium est préparée par ajout du sel de sodium du fosinopril au système de solvants, soit dans ses formes cristallines A ou B, soit dans un mélange des deux.

12. Procédé selon la revendication 11, **caractérisé en ce qu'**il comprend le mélange du sel de sodium de fosinopril avec un solvant choisi à partir de ceux contenant de l'oxygène dans leur molécule et des nitriles ou de mélanges de ceux-ci, de sorte que le mélange résultant possède une teneur en eau inférieure à 0,2 % et une teneur en alcool aliphatique en C₁-C₄, linéaire ou ramifié, supérieure à 0,4 % par rapport au volume total du mélange, et la réalisation d'une cristallisation à une température entre 0°C et 50°C, avec une séparation supplémentaire à partir du mélange des cristaux précipités du polymorphe A de fosinopril de sodium.

13. Procédé selon la revendication 12, **caractérisé en ce que**, indépendamment ou de concert, les caractéristiques suivantes sont comprises : l'alcool aliphatique en C₁-C₄, linéaire ou ramifié, est du méthanol ou de l'isopropanol et sa teneur est entre 1 % et 5 % (v/v) du total eau plus solvant ; la température de cristallisation est entre 35°C et 45°C ; et le mélange est refroidi à une température entre 15°C et 25°C avant que les cristaux de polymorphe A du sel de sodium du fosinopril soient séparés à partir du mélange.

14. Procédé selon la revendication 5 ou 6, **caractérisé en ce qu'**il comprend le mélange du fosinopril et du sel de sodium de l'acide carboxylique aliphatique dans du tétrahydrofurane, de sorte que le mélange résultant possède une teneur en eau inférieure à 0,2 % par rapport au volume total du mélange, et la réalisation d'une cristallisation à une température entre 20°C et 35°C, avec une séparation supplémentaire à partir du mélange des cristaux précipités du polymorphe A de fosinopril de sodium.

15. Procédé selon la revendication 5 ou 6, **caractérisé en ce qu'**il comprend le mélange du fosinopril et du sel de sodium de l'acide carboxylique aliphatique dans du tétrahydrofurane jusqu'à ce qu'une solution totale soit formée, de sorte que le mélange résultant possède une teneur en eau inférieure à 0,2 % par rapport au volume total du mélange, et la réalisation d'une cristallisation à une température entre 0°C et 5°C, avec une séparation supplémentaire à partir du mélange des cristaux précipités du polymorphe B de fosinopril de sodium.

16. Procédé selon la revendication 14 ou 15, **caractérisé en ce que** l'acide carboxylique aliphatique est choisi à partir de l'acide 2-éthylhexanoïque et de l'acide pivalique.

17. Procédé selon la revendication 11, **caractérisé en ce qu'**il comprend le mélange du sel de sodium du fosinopril dans du tétrahydrofurane, de sorte que le mélange résultant possède une teneur en eau inférieure à 0,2 % par rapport au volume total du mélange, et la réalisation d'une cristallisation à une température entre 20°C et 35°C, avec une séparation supplémentaire à partir du mélange des cristaux précipités du polymorphe A de fosinopril de sodium.
